# EUROPÄISCHE PATENTSCHRIFT

(11) **EP 3 902 733 B1**
(45) Veröffentlichungstag und Bekanntmachung des Hinweises auf die Patenterteilung: **31.07.2024**
(21) Anmeldenummer: 19829130.4
(22) Anmeldetag: 18.12.2019
(51) Int. Cl.: B62D 5/04

(54) **ELEKTROMECHANISCHE KRAFTFAHRZEUGLENKUNG**
ELECTROMECHANICAL MOTOR VEHICLE STEERING SYSTEM
DIRECTION ÉLECTROMÉCANIQUE DE VÉHICULE AUTOMOBILE

(30) Priorität: 28.12.2018 DE 102018133697
(43) Veröffentlichungstag der Anmeldung: 03.11.2021
(73) Patentinhaber: VOLKSWAGEN AKTIENGESELLSCHAFT, 38440 Wolfsburg (DE)
(72) Erfinder: KREUTZ, Stephan, 30659 Hannover (DE); DREYER, Dirk, 31655 Stadthagen (DE); MÖLLER, Jens, 31319 Sehnde (DE)
(86) Internationale Anmeldenummer: PCT/EP2019/085892
(87) Internationale Veröffentlichungsnummer: WO 2020/136050

(56) Entgegenhaltungen:
- EP-A1- 2 881 304
- EP-A2- 3 219 578
- DE-A1- 102013 105 510

## Beschreibung

Die Erfindung bezieht sich auf eine elektromechanische Kraftfahrzeuglenkung mit den Merkmalen des Oberbegriffs von Patentanspruch 1.

Zur Begrenzung des axialen Hubs einer axial bewegbar in einem Lenkgetriebegehäuse angeordneten Lenkstange sind unterschiedliche Konzepte bereits allgemein bekannt.

Eine erste Möglichkeit besteht darin, in der Kraftfahrzeuglenkung einen mechanischen Endanschlag vorzusehen, gegen welchen die Lenkstange bei einem bestimmten Radeinschlag anläuft, um einen weitergehenden Radeinschlag zu verhindern. Hierdurch wird der kleinste Wendekreis eines Fahrzeugs bestimmt. Um die Aufprallhärte im mechanischen Endanschlag zu mindern, können metallische Federelemente zwischen den Spurstangengelenken und dem Lenkgetriebegehäuse angeordnet werden, wie dies beispielsweise in DE 10 2007 012 655 A1 beschrieben ist. Ferner ist die Verwendung von Anschlagelementen aus Elastomermaterial zur Geräuschminderung im mechanischen Endanschlag aus EP 1 429 951 B1 bekannt.

Eine zweite Möglichkeit zur Begrenzung des axialen Hubs der Lenkstange besteht in einer besonderen Ansteuerung des Elektromotors der Kraftfahrzeuglenkung, indem zum Ende des axialen Hubs die Unterstützungskraft des Elektromotors zurückgenommen oder eine Gegenkraft aufgebaut wird. Solche Endanschläge werden auch als Software-Endanschläge bezeichnet. Beispiele hierfür finden sich unter anderem in DE 102 44 067 A1 und DE 10 2007 024 489 B4. Fällt ein solcher Software-Endanschlag aus, beispielsweise bei stromlosem Elektromotor, ist die ursprüngliche Endanschlagfunktion nicht mehr gegeben.

Eine gattungsgemäße elektromechanische Kraftfahrzeuglenkung gemäß dem Oberbegriff von Patentanspruch 1 ist aus EP 3 219 578 A2 bekannt. Diese weist ein elastisches Dämpfungselement auf, das im stromlosen Zustand auf Block komprimierbar ist. Im bestromten Zustand ist ein Software-Endanschlag vorgesehen, der so eingestellt ist, dass dieser in einem teilkomprimierten Zustand des Dämpfungselements zur Wirkung kommt, so dass noch ein Restverformungsspielraum verbleibt. Dies bedeutet, dass im stromlosen Zustand die Begrenzung des axialen Hubs der Lenkstange durch den axialen Endanschlag bei einem größeren axialen Hub erfolgt als im bestromten Zustand.

Im heutigen Kraftfahrzeugbau wird aus Kostengründen eine Standardisierung der Kraftfahrzeuglenkung angestrebt. Idealerweise soll hierzu eine Kraftfahrzeuglenkung für möglichst viele unterschiedliche Fahrzeugtypen und/oder -modelle einsetzbar sein. Bei einer solchen Ausgangslage besteht das Problem, dass der axiale Hub der Lenkstange in manchen Fahrzeugen und bestimmten Situationen zu einer Kollision der Fahrzeugräder mit dem Radhaus führen kann, wohingegen für andere Fahrzeuge eine solche Kollisionsproblematik nicht gegeben ist. Mit anderen Worten, es besteht bei einer standardisierten Kraftfahrzeuglenkung ein Interesse daran, je nach Fahrzeugtyp und/oder -modell einen bestimmten maximalen axialen Hub der Lenkstange einzustellen.

Über einen mechanischen Endanschlag der oben erläuterten Art ist dies nicht möglich. Dort kommt es stets bei gleichem Hub zum einem Eintritt in den mechanischen Endanschlag. Eine Anpassung an unterschiedliche Fahrzeugtypen und -modelle lässt sich so nicht verwirklichen. Vielmehr ist es nötig, für jeden Fahrzeugtyp oder jedes Fahrzeugmodell den mechanischen Endanschlag individuell anzupassen, was mit entsprechendem Aufwand verbunden ist, sofern man nicht eine unnötige Einschränkung des Wendekreises in Kauf nehmen möchte, welche unvermeidlich wäre, wenn man eine Standardlenkung auf den Fahrzeugtyp oder das Fahrzeugmodell mit dem kleinstmöglichen axialen Hub der Lenkstange auslegte.

Software-Endanschläge sind aufgrund ihrer Abhängigkeit vom Vorhandensein elektrischen Stroms allein ungeeignet, das oben genannte Problem der Kollision der Fahrzeugräder mit dem Radhaus zu vermeiden. In der Praxis ist es jedoch erforderlich, eine solche Kollision auch bei stromloser Lenkung zu verhindern.

Vor diesem Hintergrund liegt der Erfindung die Aufgabe zu Grunde, eine für unterschiedliche Fahrzeugtypen und -modelle geeignete standardisierte Fahrzeuglenkung mit zuverlässig verfügbarer Anschlagdämpfung zu schaffen, welche unabhängig vom maximalen axialen Hub der Lenkstange ist und möglichst große Wendekreise gestattet.

Diese Aufgabe wird durch eine elektrische Kraftfahrzeuglenkung gemäß Patentanspruch 1 gelöst.

Im Normalbetrieb, d.h. bei bestromter Lenkung werden hierdurch Einschränkungen beim Wendekreis vermieden, da das Dämpfungselement durch die Kraft des Elektromotors in gewünschter Art und Weise komprimiert werden kann. Gleichwohl wird im unbestromten Zustand, beispielsweise bei abgeschalteter Lenkung oder Ausfall des Elektromotors, eine Kollision der Fahrzeugräder mit dem Radhaus unterbunden. Da die in einer solchen Situation auftretenden Axialkräfte an der Lenkstange deutlich kleiner sind, als die vom Elektromotor bereitgestellten Axialkräfte, verhindert die entsprechend abgestimmte Härte des Dämpfungselements in einem solchen Fall ein stärkeres Zusammendrücken des Dämpfungselements, so dass über die gesamte bestimmungsgemäße Palette von Fahrzeugtypen und -modellen Kollisionen der Fahrzeugräder mit dem Radhaus vermieden werden. Im unbestromten Zustand ist der kleinste Wendekreis der Kraftfahrzeuglenkung somit größer als im bestromten Zustand. Da unbestromte Zustände nicht den Regelbetrieb darstellen, kann ein etwas größerer Wendekreis in dieser Situation jedoch problemlos verschmerzt werden.

Das Dämpfungselement kann im normalen Betrieb bei bestromter Lenkung ohne weiteres überlenkt werden, ermöglicht jedoch im stromlosen Zustand der Lenkung eine wirksame axiale Hubbegrenzung der Lenkstange.

Vorteilhafte Ausgestaltungen der Erfindung sind in weiteren Patentansprüchen angegeben.

So kann das Dämpfungselement beispielsweise aus einem Elastomermaterial bestehen, wodurch sich die benötigte Elastizität sehr gut einstellen lässt. Zudem gestattet die Herstellung aus einem Elastomermaterial eine einfache Anpassung an unterschiedliche räumliche Einbausituationen.

Insbesondere kann das Dämpfungselement als Ring aus Elastomermaterial ausgebildet sein, durch welchen die Lenkstange hindurchgeführt ist. Der Fertigungs- und Montageaufwand für die Begrenzung des axialen Hubs der Lenkstange bleiben hierdurch außerordentlich gering.

Gemäß einer weiteren vorteilhaften Ausgestaltung der Erfindung ist die Axiallänge des Dämpfungselements größer als dessen Wanddicke in Radialrichtung. Hierdurch kann im Vergleich zur Hubbegrenzung im stromlosen Zustand ein verhältnismäßig großer Zusatzhub für den bestromten Zustand bereitgestellt werden, um möglichst kleine Wendekreise zu verwirklichen.

Die Elastizität des Dämpfungselements kann beispielsweise derart gewählt werden, dass das Dämpfungselement durch den Elektromotor auf Blocklänge komprimierbar ist. Dies begünstigt neben einer kompakten Bauweise die Verwirklichung kleiner Wendekreise.

Weiterhin kann die Elastizität des Dämpfungselement beispielsweise derart gewählt werden, dass das Dämpfungselement im unbestromten Zustand der Lenkung, beispielsweise durch eine vom Fahrer über die Lenkungshandhabe aufgebrachte Axialkraft, lediglich teilweise komprimiert wird, vorzugsweise weitgehend unkomprimiert bleibt. Hierdurch wird im unbestromten Zustand über alle bestimmungsgemäßen Fahrzeugtypen und -modelle die Gefahr einer Kollision der Fahrzeugräder mit dem Radhaus zuverlässig vermieden.

In einer im Hinblick auf die Unterbringung des Dämpfungselements günstigen Ausführungsvariante ist das Dämpfungselement zwischen einem an der Lenkstange angebrachten Spurstangengelenk und einem Stirnwandabschnitt des Lenkgetriebegehäuse angeordnet.

Gemäß einer weiteren vorteilhaften Ausgestaltung der Erfindung ist die mechanische Dämpfung durch das Dämpfungselement mit einem Software-Endanschlag verblendet. Ein solcher Software-Endanschlag kann beispielsweise wie in DE 102 44 067 A1 und DE 10 2007 024 489 B4 beschrieben oder auch in anderer Art und Weise ausgebildet sein. Hierdurch kann der Endanschlag für den axialen Hub der Lenkstange im Bereich der Komprimierung des Dämpfungselements je nach Bedarf eingestellt werden. Ergeben sich für ein bestimmtes Fahrzeug in Bezug auf den maximalen axialen Hub bei bestromter Lenkung restriktivere Einschränkungen, wird eine geringere Kompression des Dämpfungselements zugelassen als bei einem Fahrzeug, bei dem solche Restriktionen nicht bestehen. In beiden Fällen kann die gleiche Lenkungshardware zum Einsatz kommen, wodurch eine breite Standardisierung erzielt wird.

Nachfolgend wird die Erfindung durch ein in der Zeichnung dargestelltes Ausführungsbeispiel näher erläutert. Die Zeichnung zeigt in:
- Figur 1: eine schematische Darstellung eines möglichen Ausführungsbeispiels einer elektromechanischen Kraftfahrzeuglenkung nach der Erfindung,
- Figur 2: eine Detailansicht der Kraftfahrzeuglenkung gemäß Figur 1 im Bereich der mechanischen Anschlagdämpfung, wobei sich das Dämpfungselement in entspanntem Zustand befindet,
- Figur 3: eine Detailansicht der Kraftfahrzeuglenkung gemäß Figur 1 im Bereich der mechanischen Anschlagdämpfung, wobei sich das Dämpfungselement in Lage des Auslegungshubs H der Lenkstange in leicht deformierten Zustand bei geringem Kraftanstieg befindet, und in
- Figur 4: eine Detailansicht der Kraftfahrzeuglenkung gemäß Figur 1 im Bereich der mechanischen Anschlagdämpfung, wobei sich das Dämpfungselement im Zustand maximaler Deformation bei Erreichen eines maximalen axialen Hubs der Lenkstange mit entsprechendem Widerstand befindet.

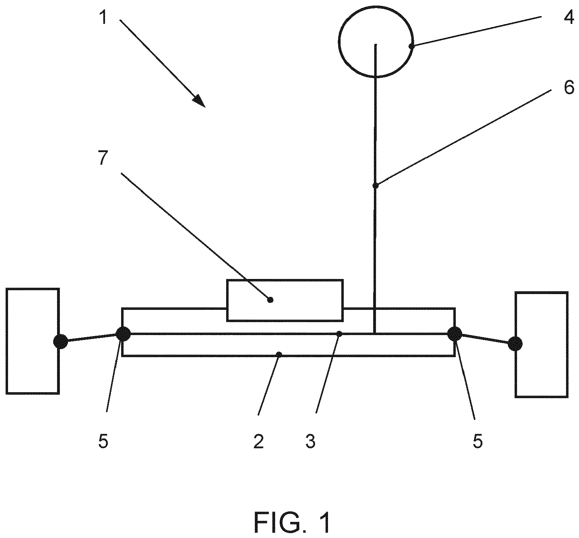

Das Ausführungsbeispiel nach den Fig. 1 bis Fig. 4 zeigt eine elektromechanische Kraftfahrzeuglenkung 1, die beispielweise als Zahnstangenlenkung für ein Personenkraftfahrzeug ausgebildet sein kann.

Die Kraftfahrzeuglenkung 1 umfasst ein Lenkgetriebegehäuse 2, durch das sich eine Lenkstange 3 erstreckt. Die Lenkstange 3 ist axial bewegbar in dem Lenkgetriebegehäuse 2 angeordnet und mittels einer fahrerseitigen Lenkungshandhabe 4, beispielsweise einem Lenkrad, axial verlagerbar.

An den axialen Enden der Lenkstange 3 ist jeweils eine zu einem lenkbaren Fahrzeugrad führende Spurstange über ein Spurstangengelenk 5 angekoppelt.

In das Lenkgetriebegehäuse 2 leitet eine Lenksäule 6, die mit der Lenkungshandhabe 4 gekoppelt ist. Die Lenksäule 6 ist beispielsweise mit einem Ritzel verbunden, das innerhalb des Lenkgetriebegehäuses 2 mit einem entsprechend verzahnten Abschnitt der Lenkstange 3 kämmt, um eine vom Fahrer an der Lenkungshandhabe 4 aufgebrachte Kraft in eine Axialkraft der Lenkstange 3 umzusetzen und damit an den Fahrzeugrädern zur Wirkung zu bringen.

Die Kraftfahrzeuglenkung 1 umfasst weiterhin einen Elektromotor 7, der mit der Lenkstange 3 zur axialen Verlagerung derselben gekoppelt ist. Über den Elektromotor 7 kann eine zusätzliche Axialkraft an der Lenkstange 3 aufgebracht werden, welche deutlich größer ist, als eine vom Fahrer über die Lenkungshandhabe 4 maximal aufbringbare Axialkraft.

Die über den Elektromotor 7 aufgebrachte Axialkraft kann dazu genutzt werden, den Fahrer beim Lenken zu unterstützen. Bei einem Ausfall der elektrischen Lenkunterstützung kann das Fahrzeug weiterhin manuell gelenkt werden.

Es ist ferner möglich, einen fahrerseitigen Lenkbefehl beispielsweise über die Stellung der Lenkungshandhabe 4 ergänzend oder ausschließlich mittels Sensoren zu erfassen und die erfassten Stellungsinformationen, gegebenenfalls unter Zwischenschaltung einer Steuereinrichtung, zur Ansteuerung des Elektromotors 7 zu verwenden.

Zur Begrenzung des maximalen axialen Hubs der Lenkstange 3 ist ein Dämpfungselement 8 an der Kraftfahrzeuglenkung 1 vorgesehen. Dessen Elastizität ist derart auf die an der Lenkstange 3 angreifenden Axialkräfte abgestimmt, um in einem stromlosen Zustand der Kraftfahrzeuglenkung 1, wie er beispielsweise bei abgeschalteter Lenkung oder einem Ausfall des Elektromotors 7 auftritt, einen axialen Endanschlag für eine beispielsweise vom Fahrer über die Lenkungshandhabe 4 aufgebrachte Axialkraft zu bilden. Das Dämpfungselement 8 wird hierbei allenfalls geringfügig deformiert und bildet in diesem Zustand einen hinreichenden Widerstand, um einen harten Stoß zu dämpfen. Andererseits ist die Elastizität des Dämpfungselements 8 so gewählt, dass dieses im bestromten Zustand der Kraftfahrzeuglenkung 1 durch die vom Elektromotor 7 aufgebrachte Axialkraft überlenkbar und dementsprechend deutlich stärker komprimierbar ist.

Im Ergebnis erfolgt somit im stromlosen Zustand die Begrenzung des axialen Hubs der Lenkstange 3 bei einem kleineren axialen Hub als im bestromten Zustand der Kraftfahrzeuglenkung 1. Hierdurch können im Normalbetrieb der Kraftfahrzeuglenkung 1 im bestromten Zustand kleinere Wendekreise realisiert werden, als im unbestromten Zustand, in welchem eine etwaige Kollision der Fahrzeugräder mit einem Radhaus zuverlässig vermieden wird. Hierdurch kann eine hardwareseitig standardisierte Kraftfahrzeuglenkung 1 für verschiedene Fahrzeuge zum Einsatz kommen, welche im Hinblick auf den maximalen Hub der Lenkstange 3 unterschiedliche Restriktionen aufweisen.

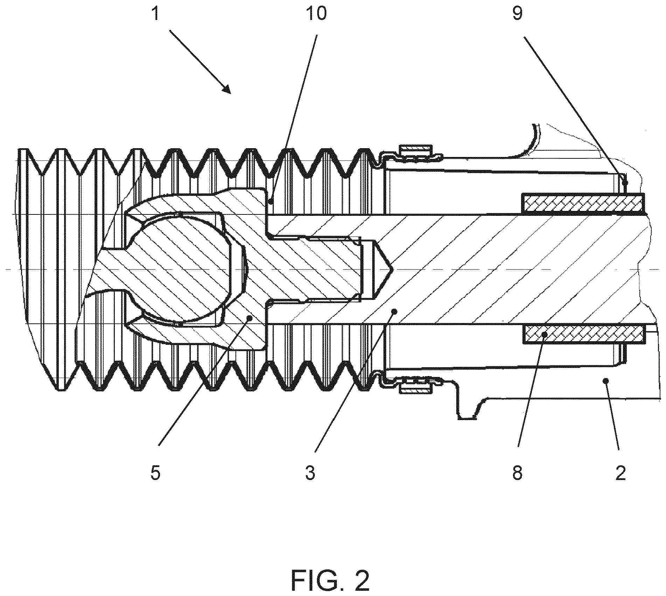

Figur 2 zeigt beispielhaft eine mögliche Einbauposition für das Dämpfungselement 8. Dieses Dämpfungselement 8 ist vorzugsweise aus einem Elastomermaterial gefertigt.

Insbesondere kann das Dämpfungselement 8 als Ring aus Elastomermaterial ausgebildet sein, durch den sich die Lenkstange 3 hindurch erstreckt.

Wie Figur 2 weiter entnommen werden kann, stützt sich das Dämpfungselement 8 an einem Stirnwandabschnitt 9 des Lenkgetriebegehäuse 2 axial ab. Es kann insbesondere an diesem Stirnwandabschnitt 9 festgelegt sein.

Bei dem dargestellten Ausführungsbeispiel ist das Dämpfungselement 8 zwischen dem Lenkgetriebegehäuse 2 und einem an der Lenkstange 3 angebrachten Spurstangengelenk 5 axial eingegliedert. Im mechanischen Endanschlag läuft ein Abschnitt des Spurstangengelenks 5 axial gegen das sich ebenfalls axial am Lenkgetriebegehäuse 2 abstützende Dämpfungselement 8 auf. Das Dämpfungselement 8 kann jedoch auch an anderer Stelle, beispielsweise auch innerhalb des Lenkgetriebegehäuses 2 zwischen der Lenkstange 3 und dem Lenkgetriebegehäuse 2 wirksam eingegliedert sein.

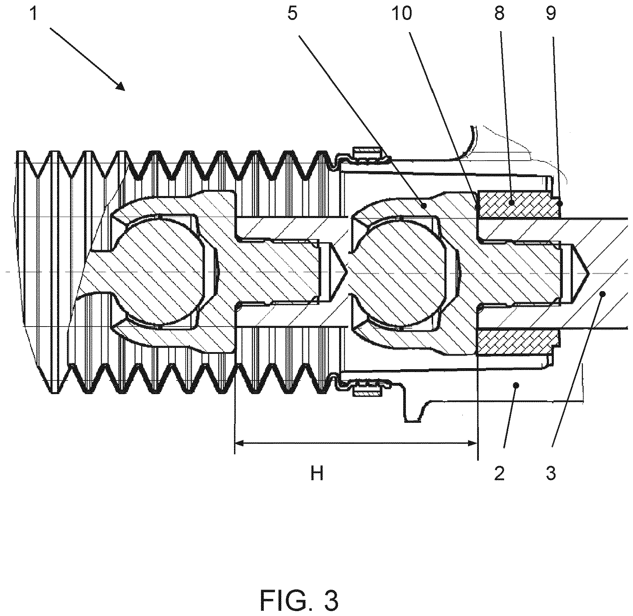

In einer Ausführungsvariante ist die Axiallänge des Dämpfungselements 8 größer als dessen Wanddicke in Radialrichtung, wodurch über den in Figur 3 dargestellten Auslegungshub der Lenkstange 3 für den mechanischen Endanschlag im unbestromten Zustand der Kraftfahrzeuglenkung 1 ein verhältnismäßig großer zusätzlicher axialer Hub bereitgestellt wird.

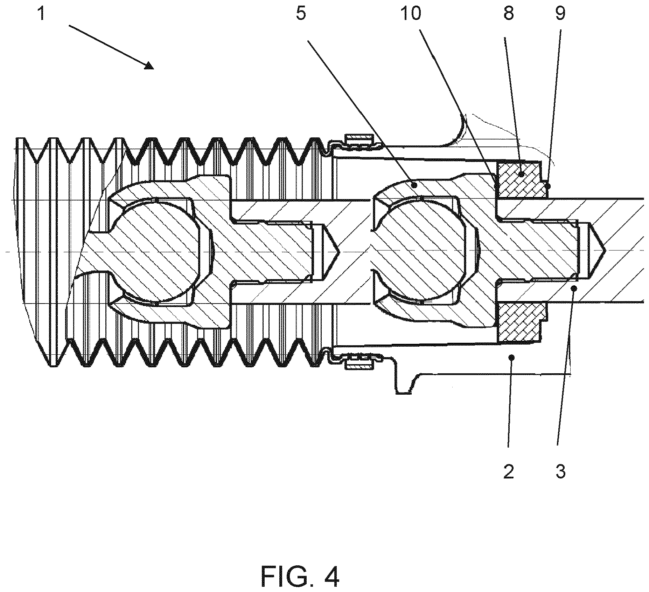

In der in Figur 3 dargestellten Stellung ist das Dämpfungselement 8 im Vergleich zu dem in Figur 2 dargestellten entspannten Zustand lediglich leicht verformt. Figur 4 zeigt zum Vergleich eine maximale Kompression des Dämpfungselements 8, wie sie aufgrund der Auslegung der Elastizität des Dämpfungselements 8 lediglich durch die Axialkräfte des Elektromotors 7 erreichbar ist. Die vom Fahrer maximal aufbringbaren Axialkräfte oder sonstige Axialkräfte ohne Unterstützung durch den Elektromotor 7 reichen nicht aus, um die in Figur 4 dargestellte Kompression des Dämpfungselements 8 zu erhalten.

Dieses Überlenken des Dämpfungselements 8 durch den Elektromotor 7 ermöglicht im Vergleich zu dem in Figur 3 dargestellten Auslegungshub H kleinere Wendekreise. Der maximal überlenkbare axiale Verformungsweg des Dämpfungselements 8 beträgt vorzugsweise mindestens das Doppelte des Verformungswegs, welcher sich im unbestromten Zustand der Kraftfahrzeuglenkung bei maximal durch den Fahrer aufbringbarer Axialkraft ergibt. Weiter bevorzugt liegt dieser bei mehr als dem 5-fachen. Bis zum Auslegungsschub H gemäß Figur 3 ergibt sich ein lediglich geringfügiger Kraftanstieg, welcher bei zunehmender Kompression ansteigt. Die Widerstandskraft des Dämpfungselements 8 in der Stellung gemäß Figur 4 beträgt vorzugsweise ein Mehrfaches der Widerstandskraft in der Stellung gemäß Figur 3.

Die Elastizität des Dämpfungselements 8 ist dementsprechend derart gewählt, dass das Dämpfungselement 8 durch die vom Fahrer über die Lenkungshandhabe 4 aufgebrachte Axialkraft bis zu einem lediglich geringen Kraftanstieg komprimiert werden kann.

Der kleinstmögliche Wendekreis der Lenkung ergibt sich bei einer Kompression des Dämpfungselements 8 durch den Elektromotor 7 auf Blocklänge. Über die Stärke der Kompression des Dämpfungselements 8 durch den Elektromotor 7 kann der kleinste Wendekreis beschränkt werden.

Diese Kompression des Dämpfungselements 8 kann über die Ansteuerung des Elektromotors 7 beeinflusst werden, so dass sich hierüber unterschiedliche zusätzliche Axialhübe über den in Figur 3 dargestellten Auslegungshub H hinaus verwirklichen lassen. Hierdurch ist eine Anpassung an unterschiedliche Fahrzeuge möglich, ohne dass dazu die Lenkungshardware verändert werden müsste. Eine solche Anpassung des maximalen axialen Hubs kann als Verblendung der mechanischen Dämpfung durch das Dämpfungselement 8 mit einem Software-Endanschlag verstanden werden.

Die vorstehend erläuterte Kraftfahrzeuglenkung ermöglicht auf sehr einfache Art und Weise eine hardwareseitige Standardisierung für unterschiedliche Fahrzeugtypen und -modelle mit zuverlässig verfügbarer Anschlagdämpfung sowohl im bestromten als auch im unbestromten Zustand, welche unabhängig vom maximalen axialen Hub der Lenkstange ist und möglichst große Wendekreise gestattet.

Die Erfindung wurde vorstehend anhand eines Ausführungsbeispiels und weiterer Abwandlungen näher erläutert. Das Ausführungsbeispiel und die Abwandlungen dienen dazu, die Ausführbarkeit der Erfindung zu belegen. Technische Einzelmerkmale, welche oben im Kontext weiterer Einzelmerkmale erläutert wurden, können auch unabhängig von diesen sowie in Kombination mit weiteren Einzelmerkmalen verwirklicht werden, selbst wenn dies nicht ausdrücklich beschrieben ist, solange dies technisch möglich ist. Die Erfindung ist daher ausdrücklich nicht auf das konkret beschriebene Ausführungsbeispiel beschränkt, sondern umfasst alle durch die Patentansprüche definierten Ausgestaltungen.

### Bezugszeichenliste

- 1: Kraftfahrzeuglenkung
- 2: Lenkgetriebegehäuse
- 3: Lenkstange
- 4: Lenkungshandhabe
- 5: Spurstangengelenk
- 6: Lenksäule
- 7: Elektromotor
- 8: Dämpfungselement
- 9: Stirnwandabschnitt
- 10: Abschnitt
- H: Auslegungshub

## Patentansprüche

1. Elektromechanische Kraftfahrzeuglenkung (1), umfassend
ein Lenkgetriebegehäuse (2),
eine Lenkstange (3), die axial bewegbar in dem Lenkgetriebegehäuse (2) angeordnet ist und mittels einer fahrerseitigen Lenkungshandhabe (4) axial verlagerbar ist, wobei der axiale Hub der Lenkstange (3) begrenzt ist,
einen Elektromotor (7), der mit der Lenkstange (3) zur axialen Verlagerung derselben gekoppelt ist, und
ein Dämpfungselement (8) für die Lenkstange (3), das in einem stromlosen Zustand der Kraftfahrzeuglenkung (1) einen axialen Endanschlag gegen eine Axialkraft bildet und damit den maximalen Lenkeinschlag im stromlosen Zustand begrenzt, **dadurch gekennzeichnet, dass**
die Elastizität des Dämpfungselements (8) auf den Elektromotor (7) derart abgestimmt und der Elektromotor (7) derart konfiguriert ist, dass im bestromten Zustand der Kraftfahrzeuglenkung der besagte axiale Endanschlag durch weitere Kompression des Dämpfungselements (8) durch die vom Elektromotor (7) aufgebrachte Axialkraft überlenkbar ist, so dass im stromlosen Zustand die Begrenzung des axialen Hubs der Lenkstange (3) durch den axialen Endanschlag bei einem kleineren axialen Hub erfolgt als im bestromten Zustand der Kraftfahrzeuglenkung (1).

2. Elektromechanische Kraftfahrzeuglenkung (1) nach Anspruch 1, **dadurch gekennzeichnet, dass** das Dämpfungselement (8) aus einem Elastomermaterial besteht.

3. Elektromechanische Kraftfahrzeuglenkung (1) nach Anspruch 1 oder 2, **dadurch gekennzeichnet, dass** das Dämpfungselement (8) als Ring aus Elastomermaterial ausgebildet ist, durch welchen die Lenkstange (3) hindurchgeführt ist.

4. Elektromechanische Kraftfahrzeuglenkung (1) nach einem der Ansprüche 1 bis 3, **dadurch gekennzeichnet, dass** die Axiallänge des Dämpfungselements (8) größer als dessen Wanddicke in Radialrichtung ist.

5. Elektromechanische Kraftfahrzeuglenkung (1) nach einem der Ansprüche 1 bis 4, **dadurch gekennzeichnet, dass** die Elastizität des Dämpfungselements (8) derart gewählt ist, dass das Dämpfungselement (8) durch den Elektromotor (7) auf Blocklänge komprimierbar ist.

6. Elektromechanische Kraftfahrzeuglenkung (1) nach einem der Ansprüche 1 bis 5, **dadurch gekennzeichnet, dass** die Elastizität des Dämpfungselements (8) derart gewählt ist, dass das Dämpfungselement (8) durch eine vom Fahrer über die Lenkungshandhabe aufgebrachte Axialkraft lediglich teilweise komprimierbar ist.

7. Elektromechanische Kraftfahrzeuglenkung (1) nach einem der Ansprüche 1 bis 6, **dadurch gekennzeichnet, dass** das Dämpfungselement (8) zwischen einem an der Lenkstange (3) angebrachten Spurstangengelenk (5) und einem Stirnwandabschnitt (9) des Lenkgetriebegehäuse (2) angeordnet ist.

8. Elektromechanische Kraftfahrzeuglenkung (1) nach einem der Ansprüche 1 bis 7, **dadurch gekennzeichnet, dass** die mechanische Dämpfung durch das Dämpfungselement (8) mit einem Software-Endanschlag verblendet ist.

9. Elektromechanische Kraftfahrzeuglenkung (1) nach einem der Ansprüche 1 bis 8, **dadurch gekennzeichnet, dass** der maximal überlenkbare axiale Verformungsweg des Dämpfungselements (8) mindestens das Doppelte des Verformungswegs beträgt, welcher sich in unbestromtem Zustand der Kraftfahrzeuglenkung bei maximal durch den Fahrer aufbringbarer Axialkraft ergibt.

## Claims

1. Electromechanical motor vehicle steering system (1) comprising
a steering gear housing (2),
a steering rod (3) which is arranged in an axially movable fashion in the steering gear housing (2) and is axially displaceable by means of a driver-side steering handle (4), wherein the axial travel of the steering rod (3) is limited,
an electric motor (7) which is coupled to the steering rod (3) for the purpose of axially displacing the steering rod, and
a damping element (8) for the steering rod (3) which, in a deenergized state of the motor vehicle steering system (1), forms an axial end stop against an axial force and thus limits the maximum steering angle in the deenergized state,
**characterized in that**
the elasticity of the damping element (8) is adapted to the electric motor (7) and the electric motor (7) is configured in such a way that, in the energized state of the motor vehicle steering system, the said axial end stop can be overridden by further compression of the damping element (8) by the axial force applied by the electric motor (7), so that, in the deenergized state, limiting of the axial travel of the steering rod (3) by at the axial end stop occurs a smaller axial travel than in the energized state of the motor vehicle steering system (1).

2. Electromechanical motor vehicle steering system (1) according to Claim 1, **characterized in that** the damping element (8) consists of an elastomer material.

3. Electromechanical motor vehicle steering system (1) according to Claim 1 or 2, **characterized in that** the damping element (8) is in the form of a ring composed of elastomer material, the steering rod (3) being routed through the ring.

4. Electromechanical motor vehicle steering system (1) according to any of Claims 1 to 3, **characterized in that** the axial length of the damping element (8) is greater than its wall thickness in the radial direction.

5. Electromechanical motor vehicle steering system (1) according to any of Claims 1 to 4, **characterized in that** the elasticity of the damping element (8) is selected in such a way that the damping element (8) can be compressed to a block length by the electric motor (7).

6. Electromechanical motor vehicle steering system (1) according to any of Claims 1 to 5, **characterized in that** the elasticity of the damping element (8) is selected in such a way that the damping element (8) can be only partially compressed by an axial force applied by the driver via the steering handle.

7. Electromechanical motor vehicle steering system (1) according to any of Claims 1 to 6, **characterized in that** the damping element (8) is arranged between a track rod joint (5) attached to the steering rod (3) and an end wall portion (9) of the steering gear housing (2).

8. Electromechanical motor vehicle steering system (1) according to any of Claims 1 to 7, **characterized in that** the mechanical damping by the damping element (8) is blended with a software end stop.

9. Electromechanical motor vehicle steering system (1) according to any of Claims 1 to 8, **characterized in that** the maximum overrideable axial deformation travel of the damping element (8) is at least twice the deformation travel that is produced in the non-energized state of the motor vehicle steering system given a maximum axial force that can be applied by the driver.

## Revendications

1. Direction de véhicule automobile électromécanique (1), comprenant
un boîtier de transmission de direction (2),
une barre de direction (3) qui est disposée de manière mobile axialement dans le boîtier de transmission de direction (2) et qui peut être déplacée axialement au moyen d'une manette de direction (4) située côté conducteur, la course axiale de la barre de direction (3) étant limitée,
un moteur électrique (7) qui est accouplé à la barre de direction (3) afin de déplacer celle-ci axialement, et
un élément d'amortissement (8) qui est destiné à la barre de direction (3), qui forme une butée d'extrémité axiale, s'opposant à une force axiale, lorsque la direction de véhicule automobile (1) n'est pas alimentée en courant et qui limite ainsi le braquage maximal en l'absence d'alimentation en courant, **caractérisée en ce que**
l'élasticité de l'élément d'amortissement (8) est adaptée au moteur électrique (7), et le moteur électrique (7) est conçu de telle sorte que, lorsque la direction de véhicule automobile est alimentée en courant, ladite butée d'extrémité axiale puisse être soumise à un survirage par une compression supplémentaire de l'élément d'amortissement (8) par la force axiale appliquée par le moteur électrique (7) de sorte que, en l'absence d'alimentation en courant, la limitation de la course axiale de la barre de direction (3) par la butée d'extrémité axiale est effectuée avec une course axiale plus faible que lorsque la direction de véhicule automobile (1) est alimentée en courant.

2. Direction de véhicule automobile électromécanique (1) selon la revendication 1, **caractérisée en ce que** l'élément d'amortissement (8) est en une matière élastomère.

3. Direction de véhicule automobile électromécanique (1) selon la revendication 1 ou 2, **caractérisée en ce que** l'élément d'amortissement (8) est conçu comme une bague en matière élastomère qui est traversée par la barre de direction (3).

4. Direction de véhicule automobile électromécanique (1) selon l'une des revendications 1 à 3, **caractérisée en ce que** la longueur axiale de l'élément d'amortissement (8) est supérieure à l'épaisseur de paroi de celui-ci dans la direction radiale.

5. Direction de véhicule automobile électromécanique (1) selon l'une des revendications 1 à 4, **caractérisée en ce que** l'élasticité de l'élément d'amortissement (8) est choisie de manière à ce que l'élément d'amortissement (8) puisse être comprimé à une longueur d'aplatissement maximum par le moteur électrique (7).

6. Direction de véhicule automobile électromécanique (1) selon l'une des revendications 1 à 5, **caractérisée en ce que** l'élasticité de l'élément d'amortissement (8) est choisie de manière à ce que l'élément d'amortissement (8) ne puisse être que partiellement comprimée par une force axiale appliquée par le conducteur par le biais de la manette de direction.

7. Direction de véhicule automobile électromécanique (1) selon l'une des revendications 1 à 6, **caractérisée en ce que** l'élément d'amortissement (8) est disposé entre une articulation de barre d'accouplement (5) montée sur la barre de direction (3) et une portion de paroi frontale (9) du boîtier de transmission de direction (2).

8. Direction de véhicule automobile électromécanique (1) selon l'une des revendications 1 à 7, **caractérisée en ce que** l'amortissement mécanique par l'élément d'amortissement (8) est atténué par une butée d'extrémité logicielle.

9. Direction de véhicule automobile électromécanique (1) selon l'une des revendications 1 à 8, **caractérisée en ce que** le chemin de déformation axiale, pouvant être soumis à un survirage maximum, de l'élément d'amortissement (8) est au moins le double du chemin de déformation qui, lorsque la direction du véhicule automobile n'est pas alimentée en courant, est obtenu avec la force axiale maximale pouvant être appliquée par le conducteur.
